# EUROPÄISCHE PATENTSCHRIFT

(11) **EP 4 571 125 B1**
(45) Veröffentlichungstag und Bekanntmachung des Hinweises auf die Patenterteilung: **26.08.2026**
(21) Anmeldenummer: 24216258.4
(22) Anmeldetag: 28.11.2024
(51) Int. Cl.: F16B 5/00, F16B 5/06, F16B 2/22

(54) **VERBINDUNGSELEMENT ZUM VERBINDEN VON MINDESTENS ZWEI BAUTEILEN MIT ABGEKANTETEN ODER VERRUNDETEN PROFILEN**
CONNECTING ELEMENT FOR CONNECTING AT LEAST TWO COMPONENTS WITH BENT OR ROUNDED PROFILES
ELÉMENT DE LIAISON POUR RELIER AU MOINS DEUX ÉLÉMENTS DE CONSTRUCTION À PROFILÉS PLIÉS OU ARRONDIS

(30) Priorität: 13.12.2023 DE 102023212642
(43) Veröffentlichungstag der Anmeldung: 18.06.2025
(73) Patentinhaber: B.Pro GmbH, 75038 Oberderdingen (DE)
(72) Erfinder: Böß, Ralf, 76703 Kraichtal (DE)
(74) Vertreter: Ullrich & Naumann PartG mbB

(56) Entgegenhaltungen:
- EP-A1- 0 105 962
- EP-B1- 1 754 895
- DE-A1- 2 829 342
- DE-C- 878 124
- DE-U1- 29 809 629

## Beschreibung

Die Erfindung betrifft ein Verbindungselement zum Verbinden von mindestens zwei Bauteilen mit abgekanteten und/oder verrundeten Profilen.

Darüber hinaus betrifft die Erfindung ein Verfahren zum Herstellen eines Verbindungselements.

Weiter betrifft die Erfindung eine Baugruppe umfassend ein erstes Bauteil mit mindestens einem ersten abgekanteten und/oder verrundeten Profil, ein zweites Bauteil mit mindestens einem zweiten abgekanteten und/oder verrundeten Profil und mindestens ein Verbindungselement.

Außerdem betrifft die Erfindung einen Speisentransportbehälter, umfassend einen Außenkörper, einen Innenkörper und eine Baugruppe.

Obwohl allgemein auf beliebige Verbindungselemente anwendbar, wird die folgende Erfindung anhand von Verbindungselementen für Bauteile von Speisentransportbehältern erläutert.

Bekannte Verbindungselemente werden in Speisentransportbehältern eingesetzt, um beispielsweise zwei Bleche mit abgekantetem Profil zu verbinden.

Ein derartiges Verbindungselement ist beispielsweise aus der EP 1 754 895 B1 bekannt. Darin ist ein zweiteiliges Verbindungselement gezeigt, bestehend aus einem äußeren Basiselement, in dem die Bleche mit abgekanteten Profilen eingesetzt werden können. Zum Festlegen der Bleche wird ein inneres Element mit einem Schwalbenschwanzprofil genutzt, das die Bleche mittels des Schwalbenschwanzes in dem Basiselement formschlüssig festlegt. Ein Nachteil an dieser Konstruktion ist, dass das Verbindungselement aus zwei Bauteilen besteht und somit der Fertigungsaufwand hoch ist.

Aus der EP 1 754 895 B1 ist es ebenfalls bekannt geworden, das Basiselement und das innere Element mit dem Schwalbenschwanzprofil einteilig herzustellen. Hierbei weist das Verbindungselement zwei Öffnungen für die Bleche auf, sodass das Verbindungselement direkt auf die Bleche aufgeschoben werden kann.

Nachteilig an dieser Konstruktion ist jedoch, dass das einteilige Verbindungselement lediglich mit hohem Aufwand und/oder hohen Kosten herstellbar ist. Beispielsweise ist die Herstellung mit einem Extruderwerkzeug aufwendig, da die notwendige Kühlung des Extruderwerkzeugs nur schwierig gewährleistet werden kann.

Aus der DE 28 29 342 A1 ist ein Wandelement mit einer Klemmleiste bekannt.

Eine Aufgabe der vorliegenden Erfindung ist es daher, ein Verbindungselement bereitzustellen, welches auf einfache Weise und mit geringen Kosten hergestellt werden kann. Außerdem soll ein einfaches und kostengünstiges Verfahren zum Herstellen eines Verbindungselements sowie eine Baugruppe mit einem Verbindungselement und ein Speisentransportwagen mit einer Baugruppe, die jeweils auf einfache Weise und kostengünstig hergestellt werden können, angegeben werden.

Eine weitere Aufgabe der vorliegenden Erfindung ist es, ein alternatives Verbindungselement, eine alternative Baugruppe, ein alternatives Verfahren zum Herstellen eines Verbindungselements und einen alternativen Speisentransportwagen bereitzustellen. In einer Ausführungsform löst die vorliegende Erfindung die vorstehend genannten Aufgaben bei einem Verbindungselement zum Verbinden von mindestens zwei Bauteilen mit abgekanteten und/oder verrundeten Profilen, insbesondere zum Einsatz bei einem Speisentransportbehälter, umfassend einen zentralen Grundkörper, wobei an dem zentralen Grundkörper seitlich zumindest zwei äußere Vorsprünge angeordnet sind, wobei der zentrale Grundkörper und die zumindest zwei äußeren Vorsprünge einteilig ausgebildet sind, wobei der zentrale Grundkörper zumindest zwei erste und zumindest zwei zweite Kontaktflächen zur Anlage der zumindest zwei abgekanteten und/oder verrundeten Bauteile aufweist, wobei die ersten Kontaktflächen unter einem Winkel zu den zweiten Kontaktflächen angeordnet sind, dadurch, dass zwischen dem zentralen Grundkörper und den äußeren Vorsprüngen jeweils ein innerer Vorsprung angeordnet ist, wobei die inneren Vorsprünge mit dem zentralen Grundkörper und den äußeren Vorsprüngen einteilig ausgebildet sind.

In einer Ausführungsform löst die vorliegende Erfindung die vorstehend genannten Aufgaben durch ein Verfahren zum Herstellen eines Verbindungselements gemäß einem der Ansprüche 1 bis 12, wobei das Verbindungselement durch Extrudieren hergestellt wird.

In einer Ausführungsform löst die vorliegende Erfindung die vorstehend genannten Aufgaben durch eine Baugruppe, umfassend ein erstes Bauteil mit mindestens einem ersten abgekanteten und/oder verrundeten Profil, ein zweites Bauteil mit mindestens einem zweiten abgekanteten und/oder verrundeten Profil und mindestens ein Verbindungselement gemäß einem der Ansprüche 1 bis 12, wobei das erste abgekantete und/oder verrundete Profil und das zweite abgekantete und/oder verrundete Profil durch das Verbindungselement formschlüssig verbindbar sind.

In einer Ausführungsform löst die vorliegende Erfindung die vorstehend genannten Aufgaben durch einen Speisentransportbehälter, umfassend einen Außenkörper, einen Innenkörper und eine Baugruppe gemäß Anspruch 14, wobei der Außenkörper das erste Bauteil der Baugruppe umfasst und wobei der Innenkörper das zweite Bauteil der Baugruppe umfasst, und wobei der Außenkörper und der Innenkörper durch die Baugruppe verbindbar sind.

Einer der damit erzielbaren Vorteile ist, dass durch die inneren und äußeren Vorsprünge ein Verbindungsprofil bereitgestellt werden kann, welches beispielsweise Bleche mit abgekanteten und/oder verrundeten Profilen zuverlässig festlegen kann und gleichzeitig auf einfache Weise, beispielsweise durch Extrusion, herstellbar ist. Insbesondere kann ein Extruderwerkzeug insbesondere durch Hohlräume zwischen den inneren und äußeren Vorsprüngen ausreichend gekühlt werden, sodass die Herstellung vereinfacht wird. Darüber hinaus wird der Kontaktbereich zwischen den Blechen und dem Verbindungswerkzeug verringert, sodass Schwankungen in der Blechdicke zum Beispiel durch Beschichtung leichter ausgeglichen werden können. Außerdem ist ein Vorteil, dass eine Kontaktfläche zwischen dem Verbindungselement und den Bauteilen verkleinert wird, sodass weniger Reibung entsteht und die Montage vereinfacht wird.

Das Verbindungselement kann insbesondere pilzförmig ausgebildet sein. Die Bauteile mit abgekanteten und/oder verrundeten Profilen, beispielsweise Bleche, können in einem Hohlraum zwischen dem Grundkörper und den inneren Vorsprüngen festgelegt werden. Dabei können die Bauteile in einer horizontalen Richtung durch den Grundkörper und die inneren Vorsprünge festgelegt werden und können in einer vertikalen Richtung durch den Grundkörper und die äußeren Vorsprünge festgelegt werden. Insbesondere kann das Verbindungselement auf die Bauteile aufgeschoben werden.

Der Ausdruck "wobei die ersten Kontaktflächen schräg zu den zweiten Kontaktflächen angeordnet sind" ist im weitesten Sinne zu verstehen und bezieht sich, insbesondere in den Ansprüchen, vorzugsweise in der Beschreibung, darauf, dass die ersten und zweiten Kontaktflächen nicht parallel zueinander angeordnet sind. Beispielsweise können sich Ebenen durch die ersten und zweiten Kontaktflächen jeweils unter einem Winkel schneiden. Es ist ebenfalls denkbar, dass die ersten und/oder die zweiten Kontaktflächen verrundet ausgebildet sind und somit ebenfalls schräg zueinander angeordnet sind.

Der Begriff "abgekantetes Profil" ist im weitesten Sinne zu verstehen und bezieht sich, insbesondere in den Ansprüchen, vorzugsweise in der Beschreibung, auf ein Bauteil, dass in zumindest eine Richtung gebogen oder umgeknickt ist. Es handelt sich somit insbesondere nicht um ein rein plattenförmiges Bauteil, sondern um ein gebogenes beziehungsweise umgeknicktes Bauteil. Insbesondere umfasst ein abgekantetes Profil auch ein Bauteil, das derart umgebogen ist, dass zwischen Endbereichen des Bauteils eine Rundung entsteht. Es ist ebenfalls denkbar, dass das Bauteil derart umgeknickt ist, dass zwischen den Endbereichen des Bauteils eine Umknickkante entsteht.

Der Begriff "Speisentransportbehälter" ist im weitesten Sinne zu verstehen und bezieht sich, insbesondere in den Ansprüchen, vorzugsweise in der Beschreibung, auch auf Tabletttransportwagen, TTW, oder auch insbesondere fahrbare Kochstationen.

Weitere Merkmale, Vorteile und weitere Ausführungsformen der Erfindung sind im Folgenden beschrieben oder werden dadurch offenbar.

Gemäß einer vorteilhaften Weiterbildung der Erfindung ist der Grundkörper als Steg ausgebildet. Insbesondere kann der Steg "T-förmig" ausgebildet sein. Von dem Steg können die inneren und äußeren Vorsprünge abragen beziehungsweise sich erstrecken. Ein Vorteil hiervon ist, dass das Verbindungselement auf einfache Weise hergestellt werden kann. Ein weiterer Vorteil ist, dass weniger Material zur Herstellung des Verbindungselements benötigt wird.

Gemäß einer weiteren vorteilhaften Weiterbildung der Erfindung sind an einem Endbereich des zentralen Grundkörpers zwei Fortsätze ausgebildet, wobei die zweiten Kontaktflächen an den zwei Fortsätzen angeordnet sind. Der Endbereich des zentralen Grundkörpers, an dem Fortsätze angeordnet sind, ist insbesondere einem Endbereich des Grundkörpers, von dem die inneren und äußeren Vorsprünge abragen, gegenüber angeordnet. Die Fortsätze sind insbesondere dazu geeignet, eine Bewegung der Bauteile in vertikaler Richtung zu begrenzen. Hierzu weisen die Fortsätze die zweiten Kontaktflächen auf, an denen die Bauteile den Grundkörper kontaktieren können. Ein Vorteil hiervon ist, dass die Bauteile zuverlässig festgelegt werden können.

Gemäß einer weiteren vorteilhaften Weiterbildung der Erfindung weisen die zweiten Kontaktflächen zumindest teilweise eine Rundung auf, wobei die Rundung sich jeweils über einen Winkel von mehr als 45°, vorzugsweise mehr als 65°, insbesondere mehr als 85°, erstreckt. Die Fortsätze können sich senkrecht zu einer Haupterstreckungsrichtung des Grundkörpers erstrecken. Die Kontaktflächen können insbesondere ausschließlich auf den Fortsätzen angeordnet sein, oder sich über die Fortsätze hinaus erstrecken. Die Rundung kann entsprechend ebenfalls ausschließlich auf den Fortsätzen ausgebildet sein, oder sich über die Fortsätze hinaus erstrecken. Wenn sich die Kontaktflächen über die Fortsätze hinaus erstrecken, ergibt sich ein Übergang, der zumindest teilweise, insbesondere vollständig, verrundet sein kann. Dabei kann die Kontaktfläche lediglich einen Teil des Übergangs oder den gesamten Übergang umfassen. Es ist möglich, dass die Kontaktflächen auf den Fortsätzen und/oder den Übergängen angeordnet sind. Ein Vorteil hiervon ist, dass die Bauteile, die mit dem Verbindungselement verbunden werden sollen, auf einfache Weise hergestellt werden können, da beispielsweise die Abkantung der Bauteile durch einfaches Umbiegen der Bauteile ermöglicht werden kann.

Gemäß einer weiteren vorteilhaften Weiterbildung der Erfindung ist eine Haupterstreckungsrichtung des zentralen Grundkörpers parallel zu einer Haupterstreckungsrichtung der inneren Vorsprünge ausgebildet. Mit anderen Worten ragen die inneren Vorsprünge in dieselbe Richtung wie der zentrale Grundkörper. Hierdurch entsteht zwischen dem zentralen Grundkörper und den inneren Vorsprüngen ein Hohlraum mit entlang der Haupterstreckungsrichtung des zentralen Grundkörpers im Wesentlichen konstanter Breite. Ein Vorteil hiervon ist, dass der Hohlraum besonders geeignet ist, ein plattenförmiges Bauteil aufzunehmen.

Gemäß einer weiteren vorteilhaften Weiterbildung der Erfindung weisen die äußeren Vorsprünge dritte Kontaktflächen zur Anlage an die zumindest zwei Bauteile auf, wobei die dritten Kontaktflächen senkrecht zu den ersten Kontaktflächen angeordnet sind. Somit können Bauteile, die durch das Verbindungselement verbunden sind, in ihrer Bewegung in Richtung der äußeren Vorsprünge gehemmt werden, das heißt in einer vertikalen Richtung, zu verschieben. Ein Vorteil hiervon ist, dass die Bauteile in dem Verbindungselement auf zuverlässige Weise festgelegt werden können.

Gemäß einer weiteren vorteilhaften Weiterbildung der Erfindung weisen die inneren Vorsprünge vierte Kontaktflächen zur Anlage an die zumindest zwei Bauteile auf, wobei die vierten Kontaktflächen parallel zu den ersten Kontaktflächen angeordnet sind. Somit können Bauteile, die durch das Verbindungselement verbunden sind, in ihrer Bewegung in Richtung der inneren Vorsprünge gehemmt werden, das heißt in einer horizontalen Richtung, zu verschieben. Ein Vorteil hiervon ist, dass die Bauteile in dem Verbindungselement zuverlässig festgelegt werden können.

Gemäß einer weiteren vorteilhaften Weiterbildung der Erfindung entspricht die Höhe der inneren Vorsprünge mindestens 5%, insbesondere mindestens 10%, vorzugsweise mindestens 20% der Höhe des zentralen Grundkörpers. Die Bauteile werden beim Verbinden durch das Verbindungselement insbesondere zwischen dem zentralen Grundkörper und den inneren Vorsprüngen festgelegt. Durch die minimale Höhe der inneren Vorsprünge vergrößert sich der Hohlraum zwischen den inneren Vorsprüngen und dem zentralen Grundkörper, in den die Bauteile eingreifen können. Somit kann die Wahrscheinlichkeit verringert werden, dass die Bauteile aus dem Verbindungselement herausgleiten.

Gemäß der Erfindung sind die inneren Vorsprünge mit dem zentralen Grundkörper und den äußeren Vorsprüngen einteilig ausgebildet. Insbesondere ist das gesamte Verbindungselement einteilig ausgebildet. Ein Vorteil hiervon ist, dass das Verbindungselement auf einfache Weise, beispielsweise mittels Extrusion oder Spritzgießen, herstellbar ist.

Gemäß einer weiteren vorteilhaften Weiterbildung der Erfindung ist zwischen dem zentralen Grundkörper und den inneren Vorsprüngen jeweils ein, insbesondere im Querschnitt U-förmiger, Hohlraum zur, insbesondere formschlüssigen, Aufnahme der Bauteile gebildet, der sich über zumindest 60%, vorzugsweise zumindest 80%, insbesondere über die gesamte Länge des Verbindungselements erstreckt. Unter dem Begriff "Länge des Verbindungselements" ist insbesondere die Erstreckung des Verbindungselements in Richtung einer Einbring- insbesondere Aufschubrichtung des Verbindungselements auf die Bauteile zu verstehen. Durch eine geforderte Länge der Hohlräume kann gewährleistet werden, dass das Verbindungselement über eine gewünschte Länge auf die Bauteile aufgeschoben werden kann.

Gemäß einer weiteren vorteilhaften Weiterbildung der Erfindung ist das Verbindungselement zumindest teilweise, insbesondere vollständig, aus Polyamid, insbesondere faserverstärktem Polyamid, hergestellt. Hierdurch kann ein Verbindungselement mit einer hohen thermischen und mechanischen Belastbarkeit hergestellt werden. Gemäß einer weiteren vorteilhaften Weiterbildung der Erfindung weisen die zumindest zwei äußeren Vorsprünge zusammen ein halbkreisförmiges Profil auf. Ein Vorteil hiervon ist, dass das Verbindungselement auf einfache Weise hergestellt werden kann. Ein weiterer Vorteil ist, dass durch die Halbkreisform ein Hohlraum zwischen den äußeren Vorsprüngen und dem zentralen Grundkörper entsteht, sodass beispielswese bei einem Herstellprozess mittels Extrusion oder Spritzgießen genügend Kühlung für das Herstellwerkzeug bereitgestellt werden kann.

Gemäß einer weiteren vorteilhaften Weiterbildung der Erfindung ist die Höhe des Verbindungselements, die als Erstreckung des Verbindungselements in Richtung der Haupterstreckungsrichtung des zentralen Grundkörpers definiert ist, geringer als die Breite des Verbindungselements, die als Erstreckung des Verbindungselements senkrecht zur Höhe des Verbindungselements und ausgehend von einem ersten äußeren Vorsprung zu einem zweiten äußeren Vorsprung definiert ist. Hierdurch weisen die dritten Kontaktflächen, die an den äußeren Vorsprüngen angeordnet sind, einen relativ zur Höhe des Verbindungselements großen Abstand zueinander auf. Ein Vorteil hiervon ist, dass die Bauteile einen höheren Widerstand gegen Biegekräfte bereitstellen können.

Gemäß einer weiteren vorteilhaften Weiterbildung der Erfindung ist das Verbindungselement symmetrisch zu einer Achse entlang der Haupterstreckungsrichtung des zentralen Grundkörpers ausgebildet. Ein Vorteil hiervon ist, dass das Verbindungselement besonders einfach hergestellt werden kann. Darüber hinaus ist ein Vorteil, dass das Verbindungselement Bauteile gleicher Bauart verbinden kann.

Gemäß einer weiteren vorteilhaften Weiterbildung der Erfindung sind die äußeren Vorsprünge länger als die inneren Vorsprünge. Mit anderen Worten ist die Erstreckung der äußeren Vorsprünge parallel zu einer Haupterstreckungsrichtung des Grundkörpers größer als die Erstreckung der inneren Vorsprünge parallel zu der Haupterstreckungsrichtung des Grundkörpers. Ein Vorteil hiervon ist, dass der Hohlraum zwischen den äußeren Vorsprüngen und dem zentralen Grundkörper vergrößert wird, sodass bei einem Herstellprozess mehr Kühlung bereitgestellt werden kann.

Gemäß einer weiteren vorteilhaften Weiterbildung der Erfindung ist das Verbindungselement auf das erste und das zweite abgekantete und/oder verrundete Profil aufschiebbar. Ein Vorteil hiervon ist, dass die Bauteile auf einfache Weise miteinander verbunden werden können.

Weitere wichtige Merkmale und Vorteile der Erfindung ergeben sich aus den Unteransprüchen, aus den Zeichnungen und aus der dazugehörigen Figurenbeschreibung anhand der Zeichnungen.

Es versteht sich, dass die vorstehend genannten und die nachstehend noch zu erläuternden Merkmale nicht nur in der jeweils angegebenen Kombination, sondern auch in anderen Kombinationen oder in Alleinstellung verwendbar sind, ohne den Rahmen der vorliegenden Erfindung zu verlassen.

Bevorzugte Ausführungen und Ausführungsformen der vorliegenden Erfindung sind in den Zeichnungen dargestellt und werden in der nachfolgenden Beschreibung näher erläutert, wobei sich gleiche Bezugszeichen auf gleiche oder ähnliche oder funktional gleiche Bauteile oder Elemente beziehen.

Dabei zeigen
- Fig. 1: ein Verbindungselement im Querschnitt gemäß einer Ausführungsform der vorliegenden Erfindung;
- Fig. 2: eine Baugruppe im Querschnitt gemäß einer Ausführungsform der vorliegenden Erfindung; und
- Fig. 3: einen Ausschnitt eines Speisentransportwagens gemäß einer Ausführungsform der vorliegenden Erfindung.

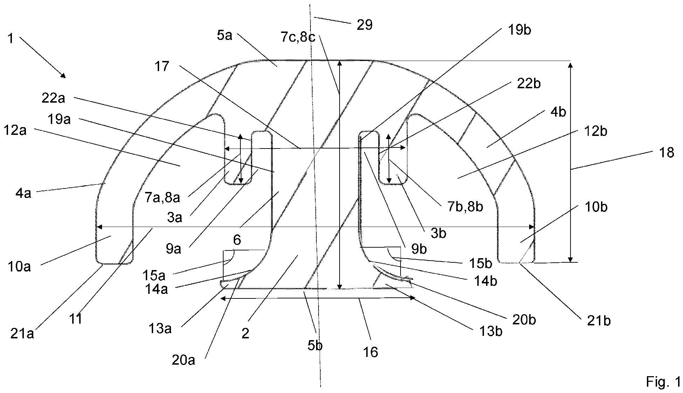

Figur 1 zeigt ein Verbindungselement im Querschnitt gemäß einer Ausführungsform der vorliegenden Erfindung.

Das Verbindungselement 1 in der Figur 1 umfasst einen zentralen Grundkörper 2, innere Vorsprünge 3a, 3b und äußere Vorsprünge 4a, 4b. Der zentrale Grundkörper 2 ist rechteckförmig, insbesondere "T-förmig" ausgebildet, wobei der zentrale Grundkörper 2 in einem oberen Endbereich 5a breiter ist als in der Mitte 6 des zentralen Grundkörpers 2. Die Haupterstreckungsrichtung 7c des zentralen Grundkörpers 2 ist definiert als die Richtung der Erstreckung des Grundkörpers 2 von dem oberen Endbereich 5a zum unteren Endbereich 5b.

Die inneren Vorsprünge 3a, 3b sind an dem oberen Endbereich 5a des Grundkörpers 2 angeordnet und rechteckförmig ausgebildet. Insbesondere erstrecken sich die inneren Vorsprünge 3a, 3b parallel zu dem zentralen Grundkörper 2. Das heißt, dass das die Haupterstreckungsrichtungen 7a, 7b der inneren Vorsprünge 3a, 3b parallel zu der Haupterstreckungsrichtung 7c des zentralen Grundkörpers 2 ausgebildet sind. Die Länge 8a, 8b der inneren Vorsprünge 3a, 3b beträgt zwischen 10% und 40% der Höhe 8c des zentralen Grundkörpers 2. Die Höhe 8c des zentralen Grundkörpers 2 ist die Erstreckung des zentralen Grundkörpers 2 in Richtung der Haupterstreckungsrichtung 7c. Die inneren Vorsprünge 3a, 3b sind dabei so ausgebildet beziehungsweise angeordnet, dass jeweils zwischen einem der inneren Vorsprüngen 3a, 3b und dem zentralen Grundkörper 2 ein Hohlraum 9a, 9b ausgebildet ist, der insbesondere rechteckig ausgebildet ist. Mit anderen Worten bilden die inneren Vorsprünge 3a, 3b zusammen mit dem zentralen Grundkörper 2 die Hohlräume 9a, 9b. Die Hohlräume 9a, 9b sind insbesondere dazu ausgebildet, Bauteile (in Figur 1 nicht gezeigt) aufzunehmen.

Die äußeren Vorsprünge 4a, 4b sind ebenfalls an dem zentralen Grundkörper 2 angeordnet. Im Gegensatz zu den inneren Vorsprüngen 3a, 3b sind die äußeren Vorsprünge 4a, 4b gekrümmt ausgebildet. Insbesondere sind die äußeren Vorsprünge 4a, 4b jeweils im Wesentlichen viertelkreisförmig ausgebildet. Die Vorsprünge 4a, 4b bilden zusammen somit im Wesentlichen einen Halbkreis oder bilden zusammen mit dem oberen flachen beziehungsweise abgeflachten Endbereich 5a des zentralen Grundkörpers 2 einen Halbkreis. Somit erstrecken sich die Vorsprünge 4a, 4b am zentralen Grundkörper 2 senkrecht zur Haupterstreckungsrichtung 7c des zentralen Grundkörpers 2 nach außen. Über den Verlauf der äußeren Vorsprünge 4a, 4b hinweg krümmen sich die äußeren Vorsprünge 4a, 4b in Richtung des unteren Endbereichs 5b des Grundelements 2, sodass die Endbereiche 10a, 10b der äußeren Vorsprünge 4a, 4b sich parallel zu der Haupterstreckungsrichtung 7c des zentralen Grundkörpers 2 erstrecken. Das Verbindungselement 1 ist somit im Wesentlichen pilzförmig ausgebildet. Es ist ebenfalls denkbar, dass die äußeren Vorsprünge 4a, 4b sich geradlinig und schräg vom Grundkörper 2 weg erstrecken oder dass die äußeren Vorsprünge 4a, 4b sich nicht kontinuierlich bis in den Endbereich 10a krümmen, sondern sich zunächst geradlinig quer zur Haupterstreckungsrichtung 7c des Grundkörpers 2 erstrecken und dann umgeknickt -oder gebogen sind, sodass die Endbereiche 10a, 10b wiederum sich parallel zur Haupterstreckungsrichtung 7c des Grundkörpers 2 erstrecken.

Die Breite 11 des Verbindungselements 1, also die Erstreckung zwischen den Endbereichen 10a, 10b der äußeren Vorsprünge 4a, 4b ist größer als die Höhe 8c des Grundkörpers 2 und somit als die Höhe des Verbindungselements 1. Zwischen den äußeren Vorsprüngen 4a, 4b und dem zentralen Grundkörper 2 sind Hohlräume 12a, 12b vorgesehen. Diese Hohlräume 12a, 12b ermöglichen bei einem Herstellvorgang mittels Extrusion oder Spritzgießen eine bessere Kühlung des Extrusions- oder Spritzgusswerkzeugs. Insbesondere wird damit eine einteilige Ausbildung beziehungsweise Herstellung des Verbindungselements 1 ermöglicht. Die Höhe 18 der äußeren Vorsprünge 4a, 4b ist definiert als die Erstreckung der äußeren Vorsprünge 4a, 4b in Richtung der Haupterstreckungsrichtung 7c von dem oberen Endbereich 5a bis zu den Endbereichen 10a, 10b der äußeren Vorsprünge 4a, 4b. Die Höhe 18 der äußeren Vorsprünge 4a, 4b ist kleiner als die Höhe 8c des zentralen Grundkörpers 2, sodass zwischen den Endbereichen 10a, 10b der äußeren Vorsprünge 4a, 4b und Fortsätzen 13a, 13b des Grundkörpers 2 Raum zum Einsetzen von Bauteilen ist.

An dem unteren Endbereich 5b des Grundkörpers 2 sind die zwei Fortsätze 13a, 13b vorgesehen. Die Fortsätze 13a, 13b erstrecken sich von dem Grundkörper 2 ausgehend senkrecht zur Haupterstreckungsrichtung 7c des Grundkörpers 2 nach außen. Der Übergang 14a, 14b zu den Fortsätzen 13a, 13b ist verrundet. Die Verrundung erstreckt sich insbesondere über einen Winkel 15a, 15b zwischen 45° und 90°. Es ist ebenfalls denkbar, dass der Übergang 14a, 14b nicht verrundet, sondern ganz oder teilweise eckig ausgebildet ist. Die Länge 16 zwischen den Fortsätzen 13a, 13b entspricht 80% bis 120% der Länge 17 zwischen den inneren Vorsprüngen 3a, 3b.

Um Bauteile in dem Verbindungselement 1 festlegen zu können, sind erste Kontaktflächen 19a, 19b zweite Kontaktflächen 20a, 20b, dritte Kontaktflächen 21a, 21b und vierte Kontaktflächen 22a, 22b vorgesehen. Die ersten Kontaktflächen 19a, 19b sind an dem zentralen Grundkörper 2 auf gleicher Höhe wie die inneren Vorsprünge 3a, 3b ausgebildet. Die zweiten Kontaktflächen 20a, 20b sind an den Oberseiten der Fortsätze 13a, 13b, also den Seiten, die in Richtung der inneren Vorsprünge 3a, 3b zeigen, vorgesehen, insbesondere an den Übergangen 14a, 14b. Die dritten Kontaktflächen 21a, 21b sind an den Unterseiten der äußeren Vorsprünge 4a, 4b, also den Seiten, die in Richtung der Fortsätze 13a, 13b zeigen, ausgebildet beziehungsweise angeordnet. Die vierten Kontaktflächen 22a, 22b sind an Innenseiten der inneren Vorsprünge 3a, 3b vorgesehen, also den Seiten, die in Richtung des Grundkörpers 2 zeigen.

Insbesondere sind die ersten Kontaktflächen 19a, 19b schräg im Vergleich zu den zweiten Kontaktflächen 20a, 20b ausgebildet. Das heißt, dass die Kontaktflächen 19a, 19b beziehungsweise 20a, 20b nicht parallel zueinander verlaufen. Dies kann beispielsweise dadurch erreicht werden, dass die zweite Kontaktfläche 20a, 20b gerundet ist, sodass diese nicht zu der ersten Kontaktfläche 19a, 19b, die gerade ist, parallel verlaufend ist. Es ist ebenfalls denkbar, dass die zweite Kontaktfläche 20a, 20b auf den Fortsätzen 13a, 13b angeordnet ist, sodass diese in eine andere Richtung ausgerichtet ist. Da die verschiedenen Kontaktflächen 19a, 19b und 20a, 20b in unterschiedliche Richtungen zeigen, wird sichergestellt, dass sie eine Verschiebung des Bauteils in unterschiedliche Richtungen verhindern können.

Das Verbindungselement 1 ist insbesondere achsensymmetrisch ausgebildet, wobei die Symmetrieachse 29 durch den Grundkörper 2 parallel zur Haupterstreckungsrichtung 7c führt.

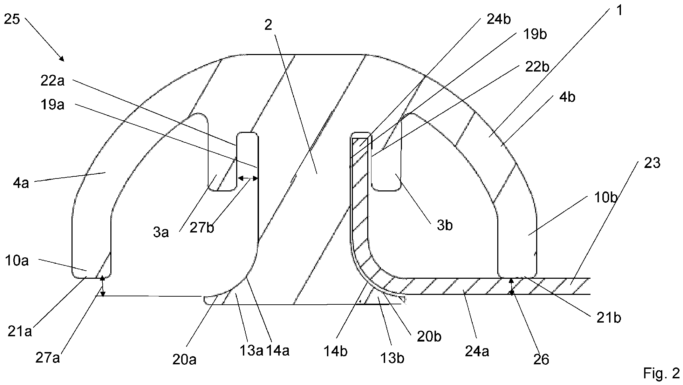

Das Zusammenwirken der Kontaktflächen 19a, 19b, 20a, 20b, 21a, 21b, 22a, 22b mit den Bauteilen, die verbunden werden sollen, wird im Folgenden bei Figur 2 erläutert.

Figur 2 zeigt im Querschnitt eine Baugruppe gemäß einer Ausführungsform der vorliegenden Erfindung.

In Figur 2 ist eine Baugruppe 25, umfassend ein Verbindungselement 1 und ein Bauteil 23, gezeigt, wobei das Bauteil 23 in dem Verbindungselement 1 festgelegt ist. Es ist möglich, dass die Baugruppe 25 ein zweites Bauteil (nicht gezeigt) umfasst, das ebenfalls in dem Verbindungselement 1 festgelegt sein kann. Der Einfachheit halber wird hier lediglich ein Bauteil 23 dargestellt. Das Verbindungselement 1 kann insbesondere dem Verbindungselement 1 gemäß Figur 1 entsprechen.

Das Bauteil 23 ist plattenförmig und profiliert ausgebildet, beispielsweise kann es aus Blech hergestellt sein. Profiliert ausgebildet heißt im Kontext von Figur 2 insbesondere, dass das Bauteil 23 nicht geradlinig, sondern gebogen ausgebildet ist. Das Bauteil weist einen ersten Bereich 24a und einen zweiten Bereich 24b auf, die unter einem Winkel von ungefähr 90° zueinander angeordnet sind. Der Übergang zwischen dem ersten Bereich 24a und dem zweiten Bereich 24b ist gerundet. Beispielsweise kann ein solches Bauteil durch Biegen eines plattenförmigen Blechs hergestellt werden. Insbesondere korrespondiert die Rundung des Bauteils 23 zur Rundung der Übergänge 14a, 14b der Fortsätze 13a, 13b.

Das Bauteil 24a ist in dem Verbindungselement 1 festgelegt. Dies wird durch die ersten, zweiten, dritten und vierten Kontaktflächen 19a, 19b, 20a, 20b, 21a, 21b, 22a, 22b erreicht. Die erste Kontaktflächen 19a, 19b verhindern, dass das Bauteil 23 in Richtung des zentralen Grundkörpers 2 - also eine erste horizontale Richtung - bewegbar ist beziehungsweise verschoben werden kann. Durch die zweiten Kontaktflächen 20a, 20b wird verhindert, dass das Bauteil 23 in Richtung der Fortsätze 13a, 13b - also eine erste vertikale Richtung - bewegbar ist beziehungsweise verschoben werden kann. Die dritten Kontaktflächen 21a, 21b verhindern, dass das Bauteil 23 in Richtung der äußeren Vorsprünge 4a, 4b - also eine zweite, der ersten vertikalen Richtung entgegengesetzte, vertikale Richtung - bewegbar ist beziehungsweise verschoben werden kann und die vierten Kontaktflächen 22a, 22b verhindern, dass das Bauteil 23 in Richtung der inneren Vorsprünge 3a, 3b - also eine zweite, der ersten horizontalen Richtung entgegengesetzte, horizontale Richtung - bewegbar ist beziehungsweise verschoben werden kann. Somit ist das Bauteil 23 sowohl in vertikaler, als auch in horizontaler Richtung festgelegt. Darüber hinaus wird auch verhindert, dass das Bauteil 23 in oder gegen den Uhrzeigersinn (um eine Achse senkrecht zur Zeichenebene der Figur 2) rotieren kann.

Dabei ist es möglich, dass einzelne Kontaktflächen 19a, 19b, 20a, 20b, 21a, 21b, 22a, 22b nicht flächig, sondern lediglich punktuell ausgebildet sind, sodass das Bauteil 23 lediglich in diskreten Punkten oder punktförmigen Bereichen an dem Verbindungselement 1 anliegt.

Der Abstand 27a zwischen den Endbereichen 10a, 10b der äußeren Vorsprünge und den Fortsätzen 13a, 13b in vertikaler Richtung korrespondiert dabei zur Dicke des Bauteils 23, sodass dieses in das Verbindungselement 1 eingesetzt werden kann. Gleichermaßen korrespondiert auch der Abstand 27b zwischen dem zentralen Grundkörper 2 und den inneren Vorsprüngen 3a, 3b zu der Dicke des Bauteils 23. Der Abstand 27a und der Abstand 27b betragen mehr als 100% und weniger als 120%, vorzugsweise weniger als 110%, insbesondere weniger als 105% der Dicke 26 des Bauteils 23. Somit kann verhindert werden, dass sich das Bauteil 23 in dem Verbindungselement 1 ungewünscht bewegen kann.

Zur Montage der Baugruppe 1 wird ein Bauteil 23, insbesondere zwei Bauteile, bereitgestellt. Anschließend wird das Verbindungselement 1 auf die Bauteile aufgeschoben. In Figur 2 wäre die Aufschubrichtung entweder in die Zeichenebene hinein oder aus der Zeichenebene heraus.

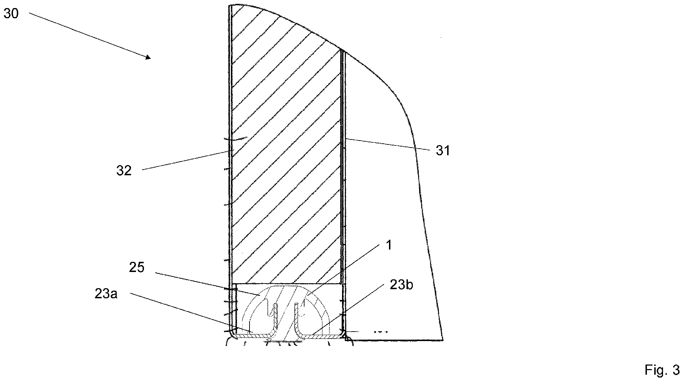

Figur 3 zeigt einen Ausschnitt eines Speisentransportwagens gemäß einer Ausführungsform der vorliegenden Erfindung.

Figur 3 zeigt im Querschnitt einen Speisentransportwagen 30 mit einem Innenkörper 31, einem Außenkörper 32 und einer Baugruppe 25. Die Baugruppe 25 ist insbesondere gemäß der Baugruppe 25 gemäß Figur 2 ausgebildet. Der Innenkörper 31 ist mit einem ersten Bauteil 23b verbunden und der Außenkörper 32 ist mit einem zweiten Bauteil 23a verbunden, wobei das erste und das zweite Bauteil durch das Verbindungselement 1 verbunden sind. Auf diese Weise verbindet das Verbindungselement 1 den Innenkörper 31 und den Außenkörper 32.

Zusammenfassend kann zumindest eine der Ausführungsformen der Erfindung zumindest einen der folgenden Vorteile und/oder zumindest eines der folgenden Merkmale aufweisen:
- Kostengünstige Herstellung.
- Einteiliges Verbindungselement.
- Herstellung mittels Spitzgießen, insbesondere des einteiligen Verbindungselements.
- Einfache Herstellung und Montage des Verbindungselements.

Obwohl die vorliegende Erfindung anhand bevorzugter Ausführungsbeispiele beschrieben wurde, ist sie nicht darauf beschränkt, sondern im Rahmen des beanspruchten Schutzbereichs auf vielfältige Weise modifizierbar.

### Bezugszeichenliste

- 1: Verbindungselement
- 2: Zentraler Grundkörper
- 3a, 3b: Innere Vorsprünge
- 4a, 4b: Äußere Vorsprünge
- 5a, 5b: Oberer, unterer Endbereich
- 6: Mitte des Grundkörpers
- 7a, 7b: Haupterstreckungsrichtungen der inneren Vorsprünge
- 7c: Haupterstreckungsrichtung des Grundkörpers
- 8a, 8b: Längen der inneren Vorsprünge
- 8c: Länge des Grundkörpers
- 9a, 9b: Hohlräume
- 10a, 10b: Endbereiche der äußeren Vorsprünge
- 11: Breite des Verbindungselements
- 12a, 12b: Hohlräume zwischen inneren und äußeren Vorsprüngen
- 13a, 13b: Fortsätze
- 14a, 14b: Übergänge
- 15: Winkel
- 16: Länge zwischen den Fortsätzen
- 17: Länge zwischen den inneren Vorsprüngen
- 18: Höhe der Vorsprünge
- 19a, 19b: Erste Kontaktflächen
- 20a, 20b: Zweite Kontaktflächen
- 21a, 21b: Dritte Kontaktflächen
- 22a, 22b: Vierte Kontaktflächen
- 23a. 23b: Bauteil
- 24a, 24b: Erster Bereich, Zweiter Bereich
- 25: Baugruppe
- 26: Dicke des Bauteils
- 27a: Abstand zwischen Endbereichen und Fortsätzen
- 27b: Abstand zwischen Grundkörper und inneren Vorsprüngen

- 29: Symmetrieachse
- 30: Speisentransportwagen
- 31: Innenkörper
- 32: Außenkörper

## Patentansprüche

1. Verbindungselement (1) zum Verbinden von mindestens zwei Bauteilen (23) mit abgekanteten und/oder verrundeten Profilen, insbesondere zum Einsatz bei einem Speisentransportbehälter (30), umfassend einen zentralen Grundkörper (2), wobei an dem zentralen Grundkörper (2) seitlich zumindest zwei äußere Vorsprünge (4a, 4b) angeordnet sind, wobei der zentrale Grundkörper (2) und die zumindest zwei äußeren Vorsprünge (4a, 4b) einteilig ausgebildet sind, wobei der zentrale Grundkörper (2) zumindest zwei erste und zumindest zwei zweite Kontaktflächen (19a, 19b, 20a, 20b) zur Anlage der zumindest zwei abgekanteten und/oder verrundeten Bauteile aufweist, wobei die ersten Kontaktflächen (19a, 19b) schräg zu den zweiten Kontaktflächen (20a, 20b) angeordnet sind,
**dadurch gekennzeichnet, dass** zwischen dem zentralen Grundkörper (2) und den äußeren Vorsprüngen (4a, 4b) jeweils ein innerer Vorsprung (3a, 3b) angeordnet ist, vorzugsweise wobei der Grundkörper (2) als Steg ausgebildet ist und wobei die inneren Vorsprünge (3a, 3b) mit dem zentralen Grundkörper (2) und den äußeren Vorsprüngen (4a, 4b) einteilig ausgebildet sind.

2. Verbindungselement (1) gemäß Anspruch 1, **dadurch gekennzeichnet, dass** an einem Endbereich (5b) des zentralen Grundkörpers (2) zwei Fortsätze (13a, 13b) ausgebildet sind, wobei die zweiten Kontaktflächen (20a, 20b) an den zwei Fortsätzen (13a, 13b) angeordnet sind, vorzugsweise wobei die zweiten Kontaktflächen (20a, 20b) zumindest teilweise eine Rundung aufweisen, wobei die Rundung sich jeweils über einen Winkel (15) von mehr als 45°, vorzugsweise mehr als 65° insbesondere mehr als 85°, erstreckt.

3. Verbindungselement (1) gemäß einem der Ansprüche 1-2, **dadurch gekennzeichnet, dass** eine Haupterstreckungsrichtung (7c) des zentralen Grundkörpers (2) parallel zu einer Haupterstreckungsrichtung (7a, 7b) der inneren Vorsprünge ausgebildet ist.

4. Verbindungselement (1) gemäß einem der Ansprüche 1-3, **dadurch gekennzeichnet, dass** die äußeren Vorsprünge (4a, 4b) dritte Kontaktflächen (21a, 21b) zur Anlage an die zumindest zwei Bauteile (23) aufweisen, wobei die dritten Kontaktflächen (21a, 21b) senkrecht zu den ersten Kontaktflächen (19a, 19b) angeordnet sind.

5. Verbindungselement (1) gemäß einem der Ansprüche 1-4, **dadurch gekennzeichnet, dass** die inneren Vorsprünge (3a, 3b) vierte Kontaktflächen (22a, 22b) zur Anlage an die zumindest zwei Bauteile (23) aufweisen, wobei die vierten Kontaktflächen (22a, 22b) parallel zu den ersten Kontaktflächen (19a, 19b) angeordnet sind.

6. Verbindungselement (1) gemäß einem der Ansprüche 1-5, **dadurch gekennzeichnet, dass** die Höhe (18) der inneren Vorsprünge (13a, 13b) mindestens 5%, insbesondere mindestens 10%, vorzugsweise mindestens 20% der Höhe des zentralen Grundkörpers (2) entspricht.

7. Verbindungselement (1) gemäß einem der Ansprüche 1-6, **dadurch gekennzeichnet, dass** zwischen dem zentralen Grundkörper (2) und den inneren Vorsprüngen (3a, 3b) jeweils ein, insbesondere im Querschnitt U-förmiger, Hohlraum (9a, 9b) zur, insbesondere formschlüssigen, Aufnahme der Bauteile gebildet ist, der sich über zumindest 60%, vorzugsweise zumindest 80%, insbesondere über die gesamte Länge des Verbindungselements (1) erstreckt.

8. Verbindungselement (1) gemäß einem der Ansprüche 1-7, **dadurch gekennzeichnet, dass** das Verbindungselement (1) zumindest teilweise, insbesondere vollständig, aus Polyamid, insbesondere faserverstärktem Polyamid, hergestellt ist.

9. Verbindungselement (1) gemäß einem der Ansprüche 1-8, **dadurch gekennzeichnet, dass** die zumindest zwei äußeren Vorsprünge (4a, 4b) zusammen ein halbkreisförmiges Profil aufweisen.

10. Verbindungselement (1) gemäß einem der Ansprüche 1-9, **dadurch gekennzeichnet, dass** die Höhe (8c) des Verbindungselements (1), die als Erstreckung des Verbindungselements (1) in Richtung der Haupterstreckungsrichtung (7c) des zentralen Grundkörpers (2) definiert ist, geringer ist als die Breite (11) des Verbindungselements (1), die als Erstreckung des Verbindungselements (1) senkrecht zur Höhe (7c) des Verbindungselements (1) und ausgehend von einem ersten äußeren Vorsprung (4a) zu einem zweiten äußeren Vorsprung (4b) definiert ist.

11. Verbindungselement (1) gemäß einem der Ansprüche 1-10, **dadurch gekennzeichnet, dass** das Verbindungselement (1) symmetrisch zu einer Achse (29) entlang der Haupterstreckungsrichtung (7c) des zentralen Grundkörpers (2) ausgebildet ist.

12. Verbindungselement (1) gemäß einem der Ansprüche 1-11, **dadurch gekennzeichnet, dass** die äußeren Vorsprünge (4a, 4b) länger als die inneren Vorsprünge (3a, 3b) sind.

13. Verfahren zum Herstellen eines Verbindungselements (1) gemäß einem der Ansprüche 1 bis 12, wobei das Verbindungselement (1) durch Extrudieren hergestellt wird.

14. Baugruppe (25), umfassend ein erstes Bauteil (23) mit mindestens einem ersten abgekanteten und/oder verrundeten Profil, ein zweites Bauteil (23b) mit mindestens einem zweiten abgekanteten und/oder verrundeten Profil und mindestens ein Verbindungselement (1) gemäß einem der Ansprüche 1 bis 12, wobei das erste abgekantete und/oder verrundete Profil und das zweite abgekantete und/oder verrundete Profil durch das Verbindungselement (1) formschlüssig verbindbar sind, vorzugsweise wobei das Verbindungselement (1) auf das erste und das zweite abgekantete und/oder verrundete Profil aufschiebbar ist.

15. Speisentransportbehälter (30), umfassend einen Außenkörper (32), einen Innenkörper (31) und eine Baugruppe (25) gemäß Anspruch 14, wobei der Außenkörper (32) das erste Bauteil (23b) der Baugruppe umfasst und wobei der Innenkörper (31) das zweite Bauteil (23) der Baugruppe umfasst, und wobei der Außenkörper (32) und der Innenkörper (31) durch die Baugruppe (25) verbindbar sind.

## Claims

1. Connecting element (1) for connecting at least two components (23) with bent and/or rounded profiles, in particular for use in a food transport container (30), comprising a central base member (2), wherein at least two outer projections (4a, 4b) are arranged laterally on the central base member (2), wherein the central base member (2) and the at least two outer projections (4a, 4b) are constructed in one piece, wherein the central base member (2) has at least two first and at least two second contact faces (19a, 19b, 20a, 20b) for abutment of the at least two bent and/or rounded components, wherein the first contact faces (19a, 19b) are arranged obliquely with respect to the second contact faces (20a, 20b), **characterised in that** an inner projection (3a, 3b) is arranged in each case between the central base member (2) and the outer projections (4a, 4b), preferably wherein the base member (2) is in the form of a web and wherein the inner projections (3a, 3b) are constructed integrally with the central base member (2) and the outer projections (4a, 4b).

2. Connecting element (1) according to claim 1, **characterised in that** at an end region (5b) of the central base member (2) two continuations (13a, 13b) are formed, wherein the second contact faces (20a, 20b) are arranged on the two continuations (13a, 13b), preferably wherein the second contact faces (20a, 20b) have at least partially a rounded portion, wherein the curvature extends in each case over an angle (15) of more than 45°, preferably more than 65°, in particular more than 85°.

3. Connecting element (1) according to either claim 1 or claim 2, **characterised in that** a main extent direction (7c) of the central base member (2) is formed parallel with a main extent direction (7a, 7b) of the inner projections.

4. Connecting element (1) according to any one of claims 1 to 3, **characterised in that** the outer projections (4a, 4b) have third contact faces (21a, 21b) for abutment against the at least two components (23), wherein the third contact faces (21a, 21b) are arranged perpendicularly to the first contact faces (19a, 19b).

5. Connecting element (1) according to any one of claims 1 to 4, **characterised in that** the inner projections (3a, 3b) have fourth contact faces (22a, 22b) for abutment against the at least two components (23), wherein the fourth contact faces (22a, 22b) are arranged parallel with the first contact faces (19a, 19b).

6. Connecting element (1) according to any one of claims 1 to 5, **characterised in that** the height (18) of the inner projections (13a, 13b) corresponds to at least 5%, in particular at least 10%, preferably at least 20%, of the height of the central base member (2).

7. Connecting element (1) according to any one of claims 1 to 6, **characterised in that** between the central base member (2) and the inner projections (3a, 3b) there is formed a hollow space (9a, 9b) which is in particular U-shaped in cross-section for receiving the components, in particular in a positive-locking manner, and which extends over at least 60%, preferably at least 80%, in particular over the entire length of the connecting element (1).

8. Connecting element (1) according to any one of claims 1 to 7, **characterised in that** the connecting element (1) is produced at least partially, in particular completely, from polyamide, in particular fibre-reinforced polyamide.

9. Connecting element (1) according to any one of claims 1 to 8, **characterised in that** the at least two outer projections (4a, 4b) together have a semi-circular profile.

10. Connecting element (1) according to any one of claims 1 to 9, **characterised in that** the height (8c) of the connecting element (1) which is defined as the extent of the connecting element (1) in the direction of the main extent direction (7c) of the central base member (2) is smaller than the width (11) of the connecting element (1) which is defined as the extent of the connecting element (1) perpendicular to the height (7c) of the connecting element (1) and extending from a first outer projection (4a) to a second outer projection (4b).

11. Connecting element (1) according to any one of claims 1 to 10, **characterised in that** the connecting element (1) is constructed symmetrically relative to an axis (29) in the main extent direction (7c) of the central base member (2).

12. Connecting element (1) according to any one of claims 1 to 11, **characterised in that** the outer projections (4a, 4b) are longer than the inner projections (3a, 3b).

13. Method for producing a connecting element (1) according to any one of claims 1 to 12, wherein the connecting element (1) is produced by means of extrusion.

14. Sub-assembly (25) comprising a first component (23) having at least a first bent and/or rounded profile, a second component (23b) having at least a second bent and/or rounded profile and at least one connecting element (1) according to any one of claims 1 to 12, wherein the first bent and/or rounded profile and the second bent and/or rounded profile can be connected in a positive-locking manner by the connecting element (1), preferably wherein the connecting element (1) can be pushed onto the first and the second bent and/or rounded profile.

15. Food transport container (30) comprising an outer member (32), an inner member (31) and a sub-assembly (25) according to claim 14, wherein the outer member (32) comprises the first component (23b) of the sub-assembly and wherein the inner member (31) comprises the second component (23) of the sub-assembly, and wherein the outer member (32) and the inner member (31) can be connected by the sub-assembly (25).

## Revendications

1. Élément de liaison (1) pour relier au moins deux composants (23) avec des profils pliés et/ou des profils arrondis, en particulier pour une utilisation dans un récipient de transport d'aliments (30), comprenant un corps de base central (2), le corps de base central (2) présentant latéralement au moins deux saillies extérieures (4a, 4b), le corps de base central (2) et les au moins deux saillies extérieures (4a, 4b) étant formés d'une seule pièce, le corps de base central (2) présentant au moins deux premières et au moins deux deuxièmes surfaces de contact (19a, 19b, 20a, 20b) pour l'appui des au moins deux composants pliés et/ou arrondis, les premières surfaces de contact (19a, 19b) étant disposées obliquement par rapport aux deuxièmes surfaces de contact (20a, 20b),
**caractérisé en ce qu'**entre le corps de base central (2) et les saillies extérieures (4a, 4b) est disposée respectivement une saillie intérieure (3a, 3b), de préférence le corps de base (2) étant formé comme une nervure et les saillies intérieures (3a, 3b) étant formées d'une seule pièce avec le corps de base central (2) et les saillies extérieures (4a, 4b).

2. Élément de liaison (1) selon la revendication 1, **caractérisé en ce qu'**à une zone d'extrémité (5b) du corps de base central (2) sont formés deux prolongements (13a, 13b), les deuxièmes surfaces de contact (20a, 20b) étant disposées sur les deux prolongements (13a, 13b), de préférence les deuxièmes surfaces de contact (20a, 20b) présentant au moins partiellement une courbure, la courbure s'étendant respectivement sur un angle (15) de plus de 45°, de préférence plus de 65°, en particulier plus de 85°.

3. Élément de liaison (1) selon l'une des revendications 1-2, **caractérisé en ce qu'**une direction principale d'extension (7c) du corps de base central (2) est formée parallèlement à une direction principale d'extension (7a, 7b) des saillies intérieures.

4. Élément de liaison (1) selon l'une des revendications 1-3, **caractérisé en ce que** les saillies extérieures (4a, 4b) présentent des troisièmes surfaces de contact (21a, 21b) pour l'appui sur les au moins deux composants (23), les troisièmes surfaces de contact (21a, 21b) étant disposées perpendiculairement aux premières surfaces de contact (19a, 19b).

5. Élément de liaison (1) selon l'une des revendications 1-4, **caractérisé en ce que** les saillies intérieures (3a, 3b) présentent des quatrièmes surfaces de contact (22a, 22b) pour l'appui sur les au moins deux composants (23), les quatrièmes surfaces de contact (22a, 22b) étant disposées parallèlement aux premières surfaces de contact (19a, 19b).

6. Élément de liaison (1) selon l'une des revendications 1-5, **caractérisé en ce que** la hauteur (18) des saillies intérieures (13a, 13b) correspond à au moins 5%, en particulier au moins 10%, de préférence au moins 20% de la hauteur du corps de base central (2).

7. Élément de liaison (1) selon l'une des revendications 1-6, **caractérisé en ce qu'**entre le corps de base central (2) et les saillies intérieures (3a, 3b) est formée respectivement une cavité (9a, 9b), en particulier en section transversale en forme de U, pour la réception, en particulier à ajustement de forme, des composants, la cavité s'étendant sur au moins 60%, de préférence au moins 80%, en particulier sur toute la longueur de l'élément de liaison (1).

8. Élément de liaison (1) selon l'une des revendications 1-7, **caractérisé en ce que** l'élément de liaison (1) est fabriqué au moins partiellement, en particulier entièrement, en polyamide, en particulier en polyamide renforcé de fibres.

9. Élément de liaison (1) selon l'une des revendications 1-8, **caractérisé en ce que** les au moins deux saillies extérieures (4a, 4b) présentent ensemble un profil en demi-cercle.

10. Élément de liaison (1) selon l'une des revendications 1-9, **caractérisé en ce que** la hauteur (8c) de l'élément de liaison (1), définie comme l'extension de l'élément de liaison (1) dans la direction de la direction principale d'extension (7c) du corps de base central (2), est inférieure à la largeur (11) de l'élément de liaison (1), définie comme l'extension de l'élément de liaison (1) perpendiculairement à la hauteur (7c) de l'élément de liaison (1) et partant d'une première saillie extérieure (4a) vers une deuxième saillie extérieure (4b).

11. Élément de liaison (1) selon l'une des revendications 1-10, **caractérisé en ce que** l'élément de liaison (1) est symétrique par rapport à une axe (29) le long de la direction principale d'extension (7c) du corps de base central (2).

12. Élément de liaison (1) selon l'une des revendications 1-11, **caractérisé en ce que** les saillies extérieures (4a, 4b) sont plus longues que les saillies intérieures (3a, 3b).

13. Procedé de fabrication d'un élément de liaison (1) selon l'une des revendications 1 à 12, l'élément de liaison (1) étant fabriqué par extrusion.

14. Ensemble (25), comprenant un premier composant (23) avec au moins un premier profil plié et/ou profil arrondi, un deuxième composant (23b) avec au moins un deuxième profil plié et/ou profil arrondi et au moins un élément de liaison (1) selon l'une des revendications 1 à 12, le premier profil plié et/ou profil arrondi et le deuxième profil plié et/ou profil arrondi pouvant être reliés à ajustement de forme par l'élément de liaison (1), de préférence l'élément de liaison (1) pouvant être emboîté sur le premier et le deuxième profil plié et/ou profil arrondi.

15. Récipient de transport d'aliments (30), comprenant un corps extérieur (32), un corps intérieur (31) et un ensemble (25) selon la revendication 14, le corps extérieur (32) comprenant le premier composant (23b) de l'ensemble et le corps intérieur (31) comprenant le deuxième composant (23) de l'ensemble, et le corps extérieur (32) et le corps intérieur (31) pouvant être reliés par l'ensemble (25).
